# EUROPÄISCHE PATENTSCHRIFT

(11) **EP 2 499 721 B1**
(45) Veröffentlichungstag und Bekanntmachung des Hinweises auf die Patenterteilung: **30.03.2016**
(21) Anmeldenummer: 10781475.8
(22) Anmeldetag: 11.11.2010
(51) Int. Cl.: H02K 5/124, H02K 5/128

(54) **ELEKTRISCHE MASCHINE, INSBESONDERE SPALTROHR-ELEKTROMOTOR**
ELECTRIC MACHINE, IN PARTICULAR A CANNED ELECTRIC MOTOR
MACHINE ÉLECTRIQUE, EN PARTICULIER MOTEUR ÉLECTRIQUE À GAINE

(30) Priorität: 12.11.2009 DE 102009052932
(43) Veröffentlichungstag der Anmeldung: 19.09.2012
(73) Patentinhaber: Siemens Aktiengesellschaft, 80333 München (DE)
(72) Erfinder: BODE, Ralf, 47441 Moers (DE)
(86) Internationale Anmeldenummer: PCT/EP2010/067284
(87) Internationale Veröffentlichungsnummer: WO 2011/058097

(56) Entgegenhaltungen:
- EP-A1- 1 271 747
- DE-A1- 3 931 988
- GB-A- 963 880
- JP-A- 59 129 553

## Beschreibung

Die Erfindung betrifft eine elektrische Maschine, insbesondere einen Spaltrohr-Elektromotor.

Eine elektrische Maschine, wie insbesondere ein Spaltrohr-Elektromotor, weist einen Stator und einen Rotor auf, die in elektrodynamischer Wechselwirkung stehen, wodurch der Rotor angetrieben wird. Beispielsweise wird der Spaltrohr-Elektromotor zum Antreiben eines Turboverdichters oder einer Kre-iselpumpe verwendet. Sind die Fördermedien des Turboverdichters oder der Kreiselpumpe entsprechend kalt, so können diese zur Kühlung des Spaltrohr-Elektromotors verwendet werden. Es ist bekannt, den Rotor mit einem Prozessgas und den Stator mit einer Prozessflüssigkeit zu kühlen. Der Spaltrohr-Elektromotor weist ein Spaltrohr auf, das zylindrisch um den Rotor verläuft und dadurch den Rotor von dem Stator hermetisch abtrennt, so dass der Rotor von dem Prozessgas und der Stator von der Prozessflüssigkeit umspülbar ist. Um nachteilige Wirbelstromverluste im Spaltrohr, die den Wirkungsgrad des Spaltrohr-Elektromotors reduzieren würden, zu vermeiden, ist das Spaltrohr aus einem elektrisch nichtleitenden Material hergestellt. Jedoch führt die Präsenz des Spaltrohrs zu einer Spaltvergrößerung zwischen dem Rotor und dem Stator, wodurch der Wirkungsgrad des Spaltrohr-Elektromotors abgesenkt ist. Dadurch wäre es wünschenswert, das Spaltrohr möglichst dünnwandig zu gestalten, wodurch jedoch die Festigkeit des Spaltrohrs reduziert ist. Dies ist insbesondere dann problematisch, wenn die Kühlmedien für den Rotor und den Stator hohe Druckdifferenzen und/oder hohe Temperaturdifferenzen haben, so dass beispielsweise bei entsprechenden Anwendungsfällen eine maximal zulässige Beulsteifigkeit des Spaltrohrs überschritten werden könnte.

Aus EP 1 271 747 A1 ist ein elektrischer Mittelfrequenzmotor mit einem flüssigkeitsdurchfluteten Stator bekannt, der durch ein Spaltrohr vom Rotor getrennt ist, welches flüssigkeitsdicht in Lagerflanschen gelagert ist. Das Spaltrohr weist an zwei Seitenteilen eine größere Dicke auf als an einem Mittelteil, wodurch die Seitenteile eine gegenüber dem Mittelteil höhere Wärmeleitfähigkeit aufweisen und formschlüssig und lösbar beidseitig die Lagerflansche kontaktieren.

Aus DE 41 38 268 A1 ist ein im Statorraum wassergekühlter und im Rotorraum luftgekühlter Elektromotor bekannt, bei dem die in den Statornuten befindlichen Wicklungen direkt vom Kühlwasser umspült werden. Das Statorblechpaket wird zum Rotorraum hin begrenzt von druckfesten inneren Gehäusewandflächen, welche die Lagerkräfte der wälzgelagerten Rotorwelle aufnehmen.

Aufgabe der Erfindung ist es, eine elektrische Maschine, insbesondere einen Spaltrohr-Elektromotor, zu schaffen, wobei die elektrische Maschine sowohl eine hohe Festigkeit als auch einen hohen Wirkungsgrad hat.

Die erfindungsgemäße elektrische Maschine gemäß Anspruch 1 weist ein Statorgehäuse und ein einen Rotor der elektrischen Maschine umgebendes Wicklungspaket auf, das in dem Statorgehäuse angeordnet ist und einen axial sich erstreckenden Wirkbereich hat, in dem das Wicklungspaket eingerichtet ist mit dem-Rotor elektrodynamisch zusammenzuwirken, wobei das Statorgehäuse an der dem Rotor zugewandten Seite einen umlaufenden Öffnungsschlitz aufweist, der in seiner Axialerstreckung der Axialerstreckung des Wirkbereichs des Wicklungspakets entspricht und in dem ein elektrisch nichtleitendes Spaltrohr der elektrischen Maschine eingesetzt ist, das mit dem Statorgehäuse derart abgedichtet ist, dass das Wicklungspaket hermetisch von dem Rotor abgetrennt ist, wobei das Spaltrohr sich axial lediglich am Wirkbereich des Wicklungspakets erstreckt.

Das Spaltrohr ist elektrisch nichtleitend ausgestaltet, so dass in dem Spaltrohr beispielsweise keine Wirbelströme aufgrund der elektrodynamischen Zusammenwirkung zwischen dem Wirkbereich des Wicklungspakets und dem Rotor induziert werden können. Die Eigenschaft des elektrischen Nichtleitens des Spaltrohrs ist lediglich im Bereich der Axialerstreckung des Wirkbereichs des Wicklungspakets notwendig, so dass erfindungsgemäß vorteilhaft das Spaltrohr sich axial lediglich am Wirkbereich des Wicklungspakets erstreckt. Die anderen Erstreckungsbereiche des Wicklungspakets, die nicht dessen Wirkbereich zuordenbar sind, sind vorteilhaft an der radial innenliegenden Seite des Wicklungspakets via das Statorgehäuse vom Rotor isoliert. Dadurch hat das Spaltrohr die minimal erforderliche Axialerstreckung, wodurch das Spaltrohr eine hohe Beulfestigkeit hat. Das Wicklungspaket kann beispielsweise von einer Kühlflüssigkeit umströmt flüssig gekühlt sein, wohingegen der Rotor von Kühlgas umströmt gasgekühlt ist. Bedingt durch eventuell auftretende extreme thermodynamische Zustände des Kühlgases und der Kühlflüssigkeit ist das Spaltrohr entsprechend mit einer hohen Festigkeit auszulegen, wobei sich daraus eine entsprechende Dicke des Spaltrohrs ergibt. Dadurch, dass das Spaltrohr sich axial lediglich am Wirkbereich des Wicklungspakets erstreckt, ist die Axialerstreckung des Spaltrohrs so gering wie möglich, wodurch die Dicke des Spaltrohrs hinsichtlich dessen Festigkeit ebenfalls als kein gewählt werden kann. Somit ist die Störung des elektrodynamischen Zusammenwirkens zwischen dem Wicklungspaket und dem Rotor reduziert, wodurch der Wirkungsgrad der elektrischen Maschine hoch ist und dennoch die elektrische Maschine eine hohe Festigkeit hat.

Das Statorgehäuse weist bevorzugt zwei Gehäuseringe auf, die radial innenseitig den Rotor umgeben und im Axialabstand zueinander so angeordnet sind, dass die Gehäuseringe bis zum Wirkbereich des Wicklungspakets sich erstrecken, wobei von den Gehäuseringen der Öffnungsschlitz begrenzt ist. Hierbei ist bevorzugt, dass die Gehäuseringe und das Spaltrohr denselben Durchmesser haben. Bevorzugtermaßen weist das Statorgehäuse einen Gehäusetopf und einen den Gehäusetopf verschließenden Gehäusedeckel auf, wobei der eine der Gehäuseringe an dem Gehäusetopf und der andere der Gehäuseringe an dem Gehäusedeckel angebracht sind. Es ist bevorzugt, dass der eine Gehäusering an dem Gehäusetopf und der andere Gehäusering an dem Gehäusedeckel angeschweißt sind. Dadurch ist eine stabile, einfach herstellbare und montierbare Konstruktion des Statorgehäuses erzielt.

Ferner ist es bevorzugt, dass das Wicklungspaket jeweils axial endseitig angeordnet einen Wicklungskopf aufweist, der dem Wirkbereich des Wicklungspakets nicht zuzurechnen ist. Dem Wicklungskopf zuzurechnen sind beispielsweise Abschnitte im Wicklungspaket, in denen eine Leiterführung derart ist, dass ein elektrodynamisches Zusammenwirken mit dem Rotor so gut wie nicht oder nicht erfolgt. Dies trifft beispielsweise für Bereiche des Wicklungspakets zu, in denen ein Leiter des Wicklungspakets in einem Umlenkabschnitte von der Axialrichtung in die Umfangsrichtung umgelenkt ist. Die Umlenkabschnitte sind in Axialrichtung gesehen auf Höhe der Gehäuseringe angeordnet, wohingegen gerade Abschnitte des Leiters im Bereich des Spaltrohrs angeordnet sind.

Das Wicklungspaket weist bevorzugt mindestens einen Wicklungsständer auf, mit dem das Wicklungspaket in sich undgegen das Statorgehäuse abgestützt ist, wobei jeder Wicklungsständer an einer der axialen Begrenzungen des Wirkbereichs angeordnet ist und sich radial bis zum benachbarten Axialende des Spaltrohrs erstreckt. Dabei ist bevorzugt das radial innenliegende Ende jedes Wicklungsständers sowohl mit dem benachbart angeordneten Axialende des Spaltrohrs als auch mit dem benachbart angeordneten Gehäusering hermetisch abgedichtet. Zum Abdichten des radial innenliegenden Endes jedes Wicklungsständers mit dem benachbart angeordneten Spaltrohr ist bevorzugt an dem Wicklungsständer jeweils ein Dichtringträger hermetisch dicht befestigt, wobei zwischen dem Dichtringträger und dem benachbart angeordneten Gehäusering jeweils ein Dichtring zum Abdichten des Wicklungsträgers gegen den Gehäusering angeordnet ist. Ferner ist bevorzugt zwischen dem radial innenliegenden Ende jedes Wicklungsständers und dem benachbart angeordneten Axialende des Spaltrohrs jeweils ein Dichtring zum hermetischen Abdichten des Wicklungsständers gegen das Spaltrohr angeordnet.

Bevorzugtermaßen ist das Statorgehäuse aus Metall und das Spaltrohr aus Faserverbundwerkstoff hergestellt. Der Faserverbundwerkstoff ist elektrisch nichtleitend, wobei für das Metall entsprechend geeignete Metalllegierungen zur Herstellung des Gehäuses gewählt werden können. Der Faserverbundwerkstoff, aus dem das Spaltrohr hergestellt ist, wird somit nur noch an den Stellen in der elektrischen Maschine verwendet, an denen seine Funktionseigenschaften bezüglich der elektrischen Nichtleitung erforderlich sind. In den übrigen Bereichen der elektrischen Maschine kommt das Metall des Statorgehäuses zum Einsatz, das höhere und dadurch bessere Festigkeitseigenschaften hat als der Faserverbundwerkstoff des Spaltrohrs, wobei kein Wirkungsgrad absenkender Effekt durch die elektrische Leitfähigkeit des Metalls des Statorgehäuses vorliegt. Bevorzugtermaßen ist die elektrische Maschine ein Spaltrohr-Elektromotor.

Im Folgenden wird ein bevorzugtes Ausführungsbeispiel einer erfindungsgemäßen elektrischen Maschine anhand der beigefügten schematischen Zeichnungen erläutert. Es zeigen:
Figur 1 einen Längsschnitt einer erfindungsgemäßen Ausführungsform der elektrischen Maschine und
Figur 2 einen Längsschnitt einer herkömmliche elektrische Maschine.

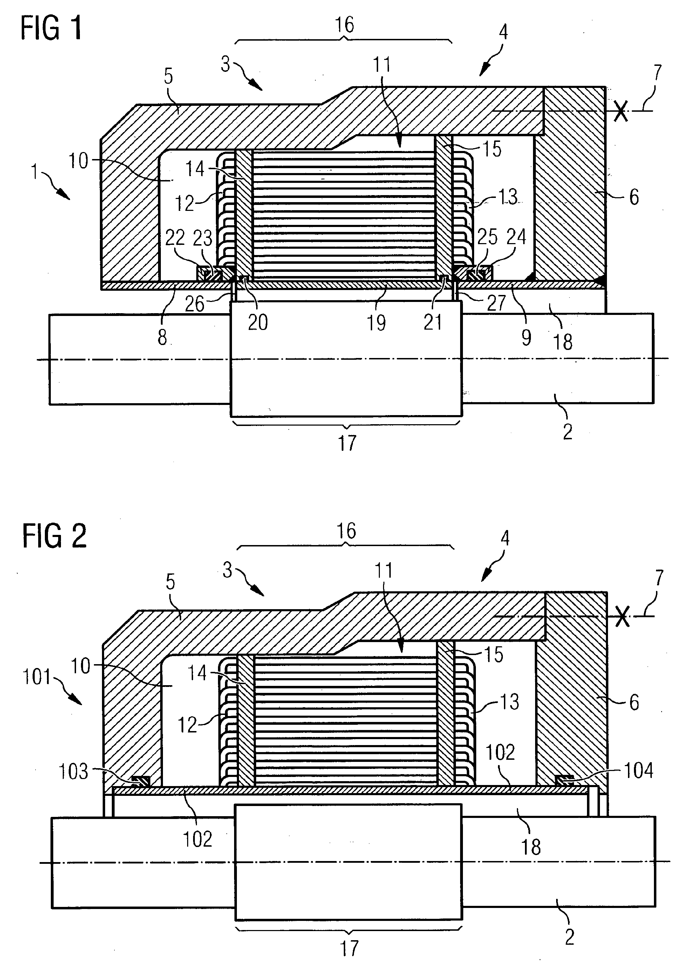

In Figur 1 ist ein Elektromotor 1 als eine Ausführungsform der erfindungsgemäßen Maschine und in Figur 2 ist ein Elektromotor 101 als eine herkömmliche Maschine gezeigt. Wie es aus Figuren 1 und 2 ersichtlich ist, weisen die Elektromotoren 1 und 101 einen Rotor 2, der um seine Drehachse drehbar ist, und einen Stator 3 auf. Der Stator 3 ist von einem Gehäuse 4 umgeben, das von einem Gehäusetopf 5 und einem Gehäusedeckel 6 gebildet ist. Der Gehäusetopf 5 weist eine um die Drehachse des Rotors 2 rotationssymmetrisch angeordnete, zylindrische Außenwand und einen Boden auf, dem axial gesehen gegenüberliegend der Gehäusedeckel 6 angeordnet ist. Der Gehäusedeckel 6 ist mit einer Gehäusedeckelschraube 7 an der Außenwand des Gehäusetopfs 5 befestigt. In dem Gehäuse 4 ist ein Gehäuseinnenraum 10 ausgebildet, der von einer Kühlflüssigkeit durchströmbar und somit flüssigkeitsgekühlt ist. In dem Gehäuseinnenraum 10 ist ein Wicklungspaket 11 angeordnet, das rotationssymmetrisch um die Drehachse des Rotors 2 ausgebildet ist. Dadurch, dass das Wicklungspaket 11 in dem Gehäuseinnenraum 10 angeordnet ist, ist das Wicklungspaket 11 von der Kühlflüssigkeit kühlbar. In Axialrichtung gesehen weist das Wicklungspaket 11 endseitig jeweils einen ersten Wicklungskopf 12 und einen zweiten Wicklungskopf 13 auf. Ferner weist das Wicklungspaket 11 einen ersten Wicklungsständer 14 und einen zweiten Wicklungsständer 15 auf, wobei die Wicklungsständer 14, 15 senkrecht zu der Drehachse des Rotors 2 verlaufen und das Wicklungspaket 11 radial nach außen gegen den Gehäusetopf 5 abstützen. Zwischen dem ersten Wicklungsständer 14 und dem zweiten Wicklungsständer 15 liegt in Axialerstreckung ein Wirkbereich 16 des Wicklungspakets 11, in dem das Wicklungspaket 11 derart eingerichtet ist mit dem Rotor elektrodynamisch zusammenzuwirken, so dass der Rotor von dem Wirkbereich 16 des Wicklungspakets 11 drehantreibbar ist. Dem Wirkbereich 16 des Wicklungspakets 11 abgewandt sind an dem ersten Wicklungsständer 14 der erste Wicklungskopf 12 und an dem zweiten Wicklungsständer 15 der zweite Wicklungskopf 13 angeordnet.

Das Wicklungspaket 11 ist beispielsweise von Lackdraht gebildet. Der Lackdraht weist Geradabschnitte auf, in denen der Lackdraht in dem Wicklungspaket 11 axial verlaufend verlegt ist, und Umlenkabschnitte auf, mit denen der Lackdraht von dem einen Geradabschnitt zu dem nächsten Geradabschnitt gekrümmt verlegt ist. Dadurch, dass der Geradabschnitt in Axialrichtung verläuft, kann der Geradabschnitt mit dem Rotor 2 in elektrodynamischer Wechselwirkung stehen, wodurch der Geradabschnitt zu dem Wirkbereich 16 des Wicklungspakets 11 zu rechnen ist. An dem Umlenkabschnitt ist der Lackdraht beispielsweise in Umfangsrichtung verlegt, so dass eine elektrodynamische Wechselwirkung des Umlenkabschnitts mit dem Rotor 2 nicht stattfinden kann, wodurch der Umlenkabschnitt zu einem der Wicklungsköpfe 12, 13 zuzuordnen ist, je nachdem auf welcher Seite der Umlenkabschnitt angeordnet ist. Somit wird der Wirkbereich 16 des Wicklungspakets 11 von den Geradabschnitten des Lackdrahts gebildet. Analog zum Wirkbereich 16 des Wicklungspakets 11 weist der Rotor 2 einen Wirkbereich 17 auf, der das elektrodynamische Gegenstück zu dem Wirkbereich 16 des Wicklungspakets 11 bildet.

Konzentrisch um den Rotor 2 ist ein Rotorspalt 18 ausgebildet, der von Kühlgas durchströmt ist, wodurch der Rotor 2 gasgekühlt ist. Zur hermetischen Isolation des Stators 3 von dem Rotor 2 ist zwischen dem Rotor 2 und dem Stator 3 beim Elektromotor 101 gemäß Fig. 2 ein Spaltrohr 102 eingebaut. Das Spaltrohr 102 ist aus einem nicht leitenden Material hergestellt und mit einem ersten Dichtring 103 am Boden des Gehäusetopfs 5 und mit einem zweiten Dichtring 104 am Gehäusedeckel 6 hermetisch abgedichtet. Dadurch hat das Spaltrohr 102 eine Axialerstreckung, die in etwa der des Gehäuses 4 entspricht. Entsprechend dieser sich ergebenden Länge für das Spaltrohr 102 ist das Spaltrohr entsprechend dick auszuführen, so dass von dem dadurch größeren Luftspalt eine beträchtliche Abschwächung der elektrodynamischen Wechselwirkung zwischen dem Rotor 2 und dem Stator 3 verursacht ist.

Der Elektromotor 1 gemäß Fig. 1 weist hingegen am Boden des Gehäusetopfs 5 einen Gehäusetopfring 8 und am Gehäusedeckel 6 einen Gehäusedeckelring 9 auf. Der Gehäusetopfring 8 ist konzentrisch um den Rotor 2 angeordnet und erstreckt sich axial vom Boden des Gehäusetopfs 5 über den ersten Wicklungskopf 12 hinweg zum ersten Wicklungsständer 14 und somit bis zum in Fig. 1 linken Rand des Wirkbereichs 16 des Wicklungspakets 11. In analoger Weise ist der Gehäusedeckelring 9 konzentrisch um den Rotor 2 angeordnet und erstreckt sich axial von dem Gehäusedeckel 6 über den zweiten Wicklungskopf 13 hinweg zum zweiten Wicklungsständer 15 und somit zum in Fig. 1 rechten Rand des Wirkbereichs 16 des Wicklungspakets 11. Der Gehäusetopfring 8 und der Gehäusedeckelring 9 haben denselben Durchmesser und sind im Axialabstand zueinander angeordnet, der der Axialerstreckung des Wirkbereichs 16 des Wicklungspakets 11 entspricht. Zwischen dem Gehäusetopfring 8 und dem Gehäusedeckelring 9 ist ein Spaltrohr 19 angeordnet, das aus einem elektrisch nichtleitenden Faserverbundwerkstoff hergestellt ist und denselben Durchmesser wie der Gehäusetopfring 8 und der Gehäusedeckelring 9 hat. Das radial innenliegende Ende des ersten Wicklungsständers 14 steht in Berührkontakt mit dem in Fig. 1 linken Ende des Spaltrohrs 19 und das radial innenliegende Ende des zweiten Wicklungsständers 15 steht in Berührkontakt mit dem in Fig. 1 rechten Ende des Spaltrohrs 19. Zwischen den radial innenliegenden Enden der Wicklungsständer 14, 15 ist jeweils ein Dichtring 20, 21 angeordnet, wobei mit den Dichtringen eine hermetische Abdichtung zwischen dem Spaltrohr 19 und den Wicklungsständern 14, 15 erzielt ist. Ferner sind an den radial innenliegenden Enden der Wicklungsständer 14, 15 Dichtringträger 22, 24 hermetisch dicht befestigt, wobei der erste Dichtringträger 22 an dem ersten Wicklungsständer 14 von dem Wirkbereich 16 des Wicklungspakets 11 sich weg erstreckt und der zweite Dichtringträger 24 an dem zweiten Wicklungsständer 15 von dem Wirkbereich 16 sich weg erstreckt. Der erste Dichtringträger 22 ist radial außerhalb des Gehäusetopfrings 8 an diesem unmittelbar benachbart angeordnet. Analog ist der zweite Dichtringträger 24 radial außerhalb des Gehäusedeckelrings 9 mit diesem unmittelbar benachbart angeordnet. Zwischen dem ersten Dichtringträger 22 und dem Gehäusetopfring 8 ist ein dritter Dichtring 23 und zwischen dem zweiten Dichtringträger 24 und dem Gehäusedeckelring 9 ist ein vierter Dichtring 25 eingebaut, wobei mit den Dichtringen 23, 25 hermetische Abdichtungen bewerkstelligt sind.

Der Gehäusetopfring 8, das Spaltrohr 19 und der Gehäusedeckelring 9 sind axial fluchtend nebeneinander angeordnet. Zwischen dem Spaltrohr 19 und dem Gehäusetopfring 8 ist ein erster Axialspalt 26 und zwischen dem Gehäusedeckelring 9 und dem Spaltrohr 19 ist ein zweiter Axialspalt 27 vorgesehen, damit bei entsprechender thermischer Ausdehnung beim Betrieb des Elektromotors 1 das Spaltrohr 19 nicht in Berührkontakt mit den Gehäusetopfring 8 und dem Gehäusedeckelring 9 kommen kann. Durch das Vorsehen der Dichtringe 20, 21, 23 und 25 und der Dichtringträger 22, 24 ist es somit ermöglicht, dass das Spaltrohr 19 auch bei entsprechender Ausdehnung durch das Vorsehen der Axialspalte 26, 27 verspannungsfrei bleibt, obwohl der Gehäuseinnenraum 10 von dem Rotorspalt 18 hermetisch abgetrennt ist.

## Patentansprüche

1. Elektrische Maschine mit einem Statorgehäuse (4) und einem einen Rotor (2) der elektrischen Maschine (1) umgebenden Wicklungspaket (11), das in dem Statorgehäuse (4) angeordnet ist und einen axial sich erstreckenden Wirkbereich (16) hat,
in dem das Wicklungspaket (11) eingerichtet ist mit dem Rotor (2) elektrodynamisch zusammenzuwirken, wobei das Statorgehäuse (4) an der dem Rotor (2) zugewandten Seite einen umlaufenden Öffnungsschlitz aufweist, der in seiner Axialerstreckung der Axialerstreckung des Wirkbereichs (16) des Wicklungspakets (11) entspricht und in den ein elektrisch nichtleitendes Spaltrohr (19) der elektrischen Maschine (1) eingesetzt ist,
das mit dem Statorgehäuse (4) derart abgedichtet ist, dass das Wicklungspaket (11) hermetisch von dem Rotor (2) abgetrennt ist, wobei das Spaltrohr (19) sich axial lediglich am Wirkbereich (16) des Wicklungspakets (11) erstreckt, **dadurch gekennzeichnet, dass** die elektrische Maschine (1) einen Gehäusetopfring (8) und einen Gehäusedeckel ring (9) aufweist,
wobei der Gehäusetopfring (8), das Spaltrohr (19) und der Gehäusedeckelring (9) axial fluchtend nebeneinander angeordnet sind sowie zwischen dem Spaltrohr (19) und dem Gehäusetopfring (8) ein erster Axialspalt (26) und zwischen dem Gehäusedeckelring (9) und dem Spaltrohr (19) ein zweiter Axialspalt (27) vorgesehen sind.

2. Elektrische Maschine gemäß Anspruch 1,
wobei das Statorgehäuse (4) zwei Gehäuseringe (8, 9) aufweist, die radial innenseitig den Rotor (2) umgeben und im Axialabstand zueinander so angeordnet sind, dass die Gehäuseringe (8, 9) bis zum Wirkbereich (16) des Wicklungspakets (11) sich erstrecken, wobei von den Gehäuseringen (8, 9) der Öffnungsschlitz begrenzt ist.

3. Elektrische Maschine gemäß Anspruch 2,
wobei die Gehäuseringe (8, 9) und das Spaltrohr (19) denselben Durchmesser haben, sodass die Gehäuseringe (8, 9) und das Spaltrohr (19) axial fluchtend nebeneinander angeordnet sind.

4. Elektrische Maschine gemäß Anspruch 2 oder 3,
wobei das Statorgehäuse (4) einen Gehäusetopf (5) und einen den Gehäusetopf (5) verschließenden Gehäusedeckel (6) aufweist, wobei der eine der Gehäuseringe (8) an dem Gehäusetopf (5) und der andere der Gehäuseringe (9) an dem Gehäusedeckel (6) angebracht sind.

5. Elektrische Maschine gemäß Anspruch 4,
wobei der eine Gehäusering (8) an dem Gehäusetopf (5) und der andere Gehäusering (9) an dem Gehäusedeckel (9) angeschweißt sind.

6. Elektrische Maschine gemäß einem der Ansprüche 1 bis 5, wobei das Wicklungspaket (11) jeweils axial endseitig angeordnet einen Wicklungskopf (12, 13) aufweist, der dem Wirkbereich (16) des Wicklungspakets (11) nicht zuzurechnen ist.

7. Elektrische Maschine gemäß Anspruch 6,
wobei das Wicklungspaket (11) mindestens einen Wicklungsständer (14, 15) aufweist, mit dem das Wicklungspaket (11) in sich und gegen das Statorgehäuse (4) abgestützt ist, wobei jeder Wicklungsständer (14, 15) an einer der axialen Begrenzungen des Wirkbereichs angeordnet ist und sich radial bis zum benachbarten Axialende des Spaltrohrs (19) erstreckt.

8. Elektrische Maschine gemäß Anspruch 7,
wobei das radial innenliegende Ende jedes Wicklungsständers (14, 15) sowohl mit dem benachbart angeordneten Axialende des Spaltrohrs (19) als auch mit dem benachbart angeordneten Gehäusering (8, 9) hermetisch abgedichtet ist.

9. Elektrische Maschine gemäß Anspruch 8,
wobei zum Abdichten des radial innenliegenden Endes jedes Wicklungsständers (14, 15) mit dem benachbart angeordneten Spaltrohr (19) an dem Wicklungsständer (14, 15) jeweils ein Dichtringträger (22, 24) hermetisch dicht befestigt ist, wobei zwischen dem Dichtringträger (22, 24) und dem benachbart angeordneten Gehäusering (8, 9) jeweils ein Dichtring (23, 25) zum Abdichten des Wicklungsständers (14, 15) gegen den Gehäusering (8, 9) angeordnet ist.

10. Elektrische Maschine gemäß Anspruch 8 oder 9,
wobei zwischen dem radial innenliegenden Ende jedes Wicklungsständers (14, 15) und dem benachbart angeordneten Axialende des Spaltrohrs (19) jeweils ein Dichtring (20, 21) zum Abdichten des Wicklungsständers (14, 15) gegen das Spaltrohr (19) angeordnet ist.

11. Elektrische Maschine gemäß einem der Ansprüche 1 bis 10, wobei das Statorgehäuse (4) aus Metall und das Spaltrohr (19) aus Faserverbundwerkstoff hergestellt sind.

12. Elektrische Maschine gemäß einem der Ansprüche 1 bis 11, wobei die elektrische Maschine ein Spaltrohr-Elektromotor ist.

## Claims

1. Electrical machine having a stator housing (4) and a winding assembly (11), which encloses a rotor (2) of the electrical machine (1), and which winding assembly is arranged in the stator housing (4) and has an axially extending effective region (16), in which the winding assembly (11) is configured to electrodynamically interact with the rotor (2), wherein the stator housing (4) has, on the side facing toward the rotor (2), a peripheral opening slot, which corresponds in its axial extension to the axial extension of the effective region (16) of the winding assembly (11) and in which an electrically nonconductive can (19) of the electrical machine (1) is inserted, which is sealed with the stator housing (4) in such a manner that the winding assembly (11) is hermetically separated from the rotor (2), wherein the can (19) extends axially only on the effective region (16) of the winding assembly (11), **characterized in that** the electrical machine (1) has a housing pot ring (8) and a housing lid ring (9), wherein the housing pot ring (8), the can (19), and the housing lid ring (9) are arranged axially aligned adjacent to one another and also a first axial gap (26) is provided between the can (19) and the housing pot ring (8) and a second axial gap (27) is provided between the housing lid ring (9) and the can (19).

2. Electrical machine according to Claim 1,
wherein the stator housing (4) has two housing rings (8, 9), which enclose the rotor (2) on the radial interior and are arranged in axial spacing to one another so that the housing rings (8, 9) extend up to the effective region (16) of the winding assembly (11), wherein the opening slot is delimited by the housing rings (8, 9).

3. Electrical machine according to Claim 2,
wherein the housing rings (8, 9) and the can (19) have the same diameter, so that the housing rings (8, 9) and the can (19) are arranged axially aligned adjacent to one another.

4. Electrical machine according to Claim 2 or 3,
wherein the stator housing (4) has a housing pot (5) and a housing lid (6) which closes the housing pot (5), wherein one of the housing rings (8) is attached to the housing pot (5) and the other of the housing rings (9) is attached to the housing lid (6).

5. Electrical machine according to Claim 4,
wherein one housing ring (8) is welded onto the housing pot (5) and the other housing ring (9) is welded onto the housing lid (9).

6. Electrical machine according to one of Claims 1 to 5, wherein the winding assembly (11) has a winding head (12, 13) arranged on each of the respective axial ends, which is not to be included in the effective region (16) of the winding assembly (11).

7. Electrical machine according to Claim 6,
wherein the winding assembly (11) has at least one winding stand (14, 15), using which the winding assembly (11) is supported per se and against the stator housing (4), wherein each winding stand (14, 15) is arranged on one of the axial delimitations of the effective region and extends radially up to the adjacent axial end of the can (19).

8. Electrical machine according to Claim 7,
wherein the radially internal end of each winding stand (14, 15) is hermetically sealed with both the axial end of the can (19) arranged adjacent and also with the housing ring (8, 9) arranged adjacent.

9. Electrical machine according to Claim 8,
wherein a sealing ring carrier (22, 24) is fastened hermetically sealed on each of the winding stands (14, 15) for sealing the radially internal end of each winding stand (14, 15) with the can (19) arranged adjacent, wherein a sealing ring (23, 25) for sealing the winding stand (14, 15) against the housing ring (8, 9) is arranged in each case between the sealing ring carrier (22, 24) and the housing ring (8, 9) arranged adjacent.

10. Electrical machine according to Claim 8 or 9,
wherein a sealing ring (20, 21), for sealing the winding stand (14, 15) in relation to the can (19), is arranged respectively between the radially internal end of each winding stand (14, 15) and the axial end of the can (19) arranged adjacent.

11. Electrical machine according to one of Claims 1 to 10, wherein the stator housing (4) is produced from metal and the can (19) is produced from fiber composite material.

12. Electrical machine according to one of Claims 1 to 11, wherein the electrical machine is a canned electric motor.

## Revendications

1. Machine électrique comprenant un carter ( 4 ) de stator et un paquet ( 11 ) d'enroulement, qui entoure un rotor ( 2 ) de la machine électrique, qui est disposé dans le carter ( 4 ) du stator et qui a une partie ( 16 ) active s'étendant axialement, dans laquelle le paquet ( 11 ) d'enroulement est agencé pour coopérer électrodynamiquement avec le rotor ( 2 ), le carter ( 4 ) du stator ayant du côté tourné vers le rotor ( 2 ) une fente d'ouverture faisant le tour, dont l'étendue axiale correspond à l'étendue axiale de la partie ( 16 ) active du paquet ( 11 ) d'enroulement et dans laquelle est inséré un tube ( 19 ) fendu, non conducteur de l'électricité, de la machine ( 1 ) électrique, qui est rendu étanche avec le carter ( 4 ) du stator, de manière à séparer hermétiquement le paquet ( 11 ) d'enroulement du rotor ( 2 ), le tube ( 19 ) fendu s'étendant axialement seulement à la partie ( 16 ) active du paquet ( 11 ) d'enroulement, **caractérisée en ce que** la machine ( 1 ) électrique a un anneau ( 8 ) de pot de carter et un anneau ( 9 ) de couvercle de carter, l'anneau ( 8 ) de pot de carter, le tube ( 19 ) fendu et l'anneau ( 9 ) de couvercle de carter étant disposés les uns à côté des autres en alignement axial, tandis qu'il est prévu, entre le tube ( 19 ) fendu et l'anneau ( 8 ) de pot de carter, un premier intervalle ( 26 ) axial et, entre l'anneau ( 9 ) de couvercle de carter et le tube ( 19 ) fendu, un deuxième intervalle ( 27 ) axial.

2. Machine électrique suivant la revendication 1,
dans laquelle le carter ( 4 ) du stator a deux anneaux ( 8, 9 ) de carter, qui entourent radialement du côté intérieur le rotor ( 2 ) et qui sont disposés à distance axiale l'un de l'autre de manière à ce que les anneaux ( 8, 9 ) de carter s'étendent jusqu'à la partie ( 16 ) active du paquet ( 11 ) d'enroulement, la fente d'ouverture étant délimitée par les anneaux ( 8, 9 ) de carter.

3. Machine électrique suivant la revendication 2,
dans laquelle les anneaux ( 8, 9 ) de carter et le tube ( 19 ) fendu ont le même diamètre de sorte que les anneaux ( 8, 9 ) de carter et le tube ( 19 ) fendu sont disposés les uns à côté des autres en alignement axial.

4. Machine électrique suivant la revendication 2 ou 3,
dans laquelle le carter ( 4 ) de stator a un pot ( 5 ) de carter et un couvercle ( 6 ) de carter fermant le pot ( 5 ) de carter, l'un des anneaux ( 8 ) du carter étant mis sur le pot ( 5 ) du carter et l'autre des anneaux ( 9 ) du carter étant mis sur le couvercle ( 6 ) du carter.

5. Machine électrique suivant la revendication 4,
dans laquelle l'un des anneaux ( 8 ) du carter est soudé au pot ( 5 ) du carter et l'autre anneau ( 9 ) du carter est soudé au couvercle ( 9 ) du carter.

6. Machine électrique suivant l'une des revendications 1 à 5,
dans laquelle le paquet ( 11 ) d'enroulement a une tête ( 12, 13 ) de bobine, qui est disposée respectivement du côté de l'extrémité axialement et qui ne peut pas être imputée à la partie ( 16 ) active du paquet ( 11 ) d'enroulement.

7. Machine électrique suivant la revendication 6,
dans laquelle le paquet ( 11 ) d'enroulement a au moins un pilier ( 14, 15 ) d'enroulement, par lequel le paquet ( 11 ) d'enroulement s'appuie en soi et contre le carter ( 4 ) du stator, chaque pilier ( 14, 15 ) d'enroulement étant disposé sur l'une des limitations axiales de la partie active et s'étendant radialement jusqu'à l'extrémité axiale voisine du tube ( 19 ) fendu.

8. Machine électrique suivant la revendication 7,
dans laquelle l'extrémité à l'intérieur radialement de chaque pilier ( 14, 15 ) d'enroulement est rendue étanche hermétiquement à la fois avec l'extrémité axiale voisine du tube ( 19 ) fendu et avec l'anneau ( 8, 9 ) du carter voisin.

9. Machine électrique suivant la revendication 8,
dans laquelle, pour rendre étanche l'extrémité intérieure radialement de chaque pilier ( 14, 15 ) d'enroulement avec le tube ( 19 ) fendu voisin, il est fixé d'une manière étanche hermétiquement sur le pilier ( 14, 15 ) de l'enroulement, respectivement un support ( 22, 24 ) de joint d'étanchéité, un joint ( 23, 25 ) d'étanchéité étant, pour rendre étanche le pilier ( 14, 15 ) de l'enroulement par rapport à l'anneau ( 8, 9 ) du carter, disposé entre le support ( 22, 24 ) du joint d'étanchéité et l'anneau ( 8, 9 ) du carter voisin.

10. Machine électrique suivant la revendication 8 ou 9,
dans laquelle un joint ( 20, 21 ) d'étanchéité est, pour rendre étanche le pilier ( 14, 15 ) de l'enroulement vis-à-vis du tube ( 19 ) fendu, disposé entre l'extrémité intérieure radialement de chaque pilier ( 14, 15 ) d'enroulement et l'extrémité axiale voisine du tube ( 19 ) fendu.

11. Machine électrique suivant l'une des revendications 1 à 10, dans laquelle le carter ( 4 ) du stator est en métal et le tube ( 19 ) fendu en matériau composite à fibres.

12. Machine électrique suivant l'une des revendications 1 à 11, dans laquelle la machine électrique est un moteur électrique à tube fendu.
